# EUROPEAN PATENT SPECIFICATION

(11) **EP 1 057 721 B1**
(45) Date of publication and mention of the grant of the patent: **05.10.2005**
(21) Application number: 00304663.8
(22) Date of filing: 01.06.2000
(51) Int. Cl.: B62J 1/14

(54) **Seat assembly for a bicycle**
Fahrradsattelvorrichtung
Selle de bicyclette

(43) Date of publication of application: 06.12.2000
(73) Proprietor: Tsuge, Kenji, Tsujido Fujisawa (JP)
(72) Inventor: Tsuge, Kenji, Tsujido Fujisawa (JP)
(74) Representative: Beresford, Keith Denis Lewis

(56) References cited:
- BR-A- 9 501 995
- FR-A- 2 094 553
- US-A- 2 227 799
- US-A- 2 234 299
- US-A- 2 516 352
- US-A- 2 715 342
- US-A- 3 092 362

## Description

### 1.Background of the Invention

This invention relates to bicycles and more particularly to a bicycle seat assembly having a pair of in line seats, one for pedaling and the other for use by the rider to hold the bicycle in an at rest position or for mounting and dismounting the bicycle.

### 2. Description of the Related Art.

To achieve optimum leverage in riding a bicycle, the rider's seat is generally positioned above the pedals at a distance to permit full extension of the legs vertically with the pedals in their lowermost position. Such full vertical leg extension enables the use of the rider's body weight in pedaling.

It is difficult for the rider to bring at least one of his or her feet comfortably to the ground to hold the bicycle in position from this seated position when stopped or when dismounting. Often, the only way to do so is to dismount the bicycle by placing one foot on a pedal and pulling the opposite leg over the bicycle frame. This is quite inconvenient as, for example, when temporarily halted at a traffic stop. To try to remain on the seat with only one of the rider's feet barely reaching the ground poses a hazard of falling over. Thus, often to avoid this problem, the seat is lowered which results in an undesirable pedaling position.

Bicycles with more than one seat are found in the prior art such as in patent nos.5,988,740 issued 11/23/99 to Caraballo, 4,541,668 issued 9/17/85 to Rouw, and 5,167,435,issued 12/1/92 to Aldi. In all of these prior art devices, the seats are positioned side by side; in Caraballo and Rouw enabling a reciprocating up and down motion of such seats to ameliorate rider fatigue; in Aldi providing two seat sections laterally adjacent to each other to facilitate dismounting. Such side by side seat positioning is not directed to and cannot overcome the above described shortcomings of the prior art. FR-A-2 094 553, US A 3 092 362 and US-A-2 715 342 provide bicycles with two seats arranged one behind the other, to enable a passenger to be carried behind the rider.

### SUMMARY OF THE INVENTION

The present invention employs an assembly for supporting a pair of bicycle seats or a single seat having two sections in an in line relationship. The bicycle is adjusted, according to the invention, so that one seat is positioned above the pedals at a height which is optimum for pedaling, and a second seat is positioned at a lower height than the first from which at least one of the rider's legs can comfortably reach the ground to hold the bicycle at rest when stopped. For optimum pedaling, the riding seat should be positioned directly above or slightly forward or backward from directly above the pedal pivot and at a height to permit the rider to fully extend his or her legs with the pedals in their bottom most position.

This end result may be achieved by employing a bicycle seat assembly having a central longitudinal bar portion and two vertically extending bar portions which extend normally from the central bar portion. The first of these bar portions is positioned above the pedals and extends in an upward direction a distance great enough to support a first seat(or seat portion) at a predetermined optimum distance from the pedals to permit full vertical extension of the rider's legs when pedaling. The second of these bar portions is positioned above a portion of the bicycle rear wheel and extends a distance great enough to support a second seat(or seat portion) a predetermined optimum distance to enable one or both of the rider's feet to comfortably reach the ground when the bicycle is stopped and rider is in an at rest position. A support bar extends in a direction opposite to that of the first two bars and is attached to the normal bicycle seat support where it can be adjusted in height as may be required to achieve the above indicated end results.

It is therefore an object of this invention to provide an improved bicycle seating device which provides for optimum pedaling and enables the rider to readily hold the bicycle in an at rest position.

It is a further object of this invention to provide an improved bicycle seating device which utilizes a pair of in line seats, one for optimum pedaling, the other for facilitating holding the bicycle in an at rest position.

Other objects of the invention will become apparent in view of the following description, taken in connection with the accompanying drawings, in which:

### DESCRIPTION OF THE DRAWINGS

FIG. 1 is a side elevational view of a first embodiment of the invention;
FIG. 2 is a side elevational view showing the first embodiment installed on a bicycle with a rider on the rear seat;
FIG 3 is a side elevational view of the first embodiment with a rider on the front seat pedaling;
FIG 4 is a top perspective view of the preferred embodiment;
FIG. 5 is a top perspective view of a second embodiment of the invention.
FIG. 6 is a side elevational view of a third embodiment of the invention;
FIG 7 is a side elevational view of a fourth embodiment of the invention;
FIG 8 is a side elevational view of a fifth embodiment of the invention;
FIG 9 is a side elevational view of a sixth embodiment of the invention;
FIG 10 is a side elevational view of a seventh embodiment of the invention shown installed on a bicycle;
FIG 11 is a side elevational view of an eighth embodiment of the invention shown installed on a bicycle; and
FIG 12 is a side elevational view of a ninth embodiment of the invention shown installed on a bicycle.

### DETAILED DESCRIPTION OF THE INVENTION

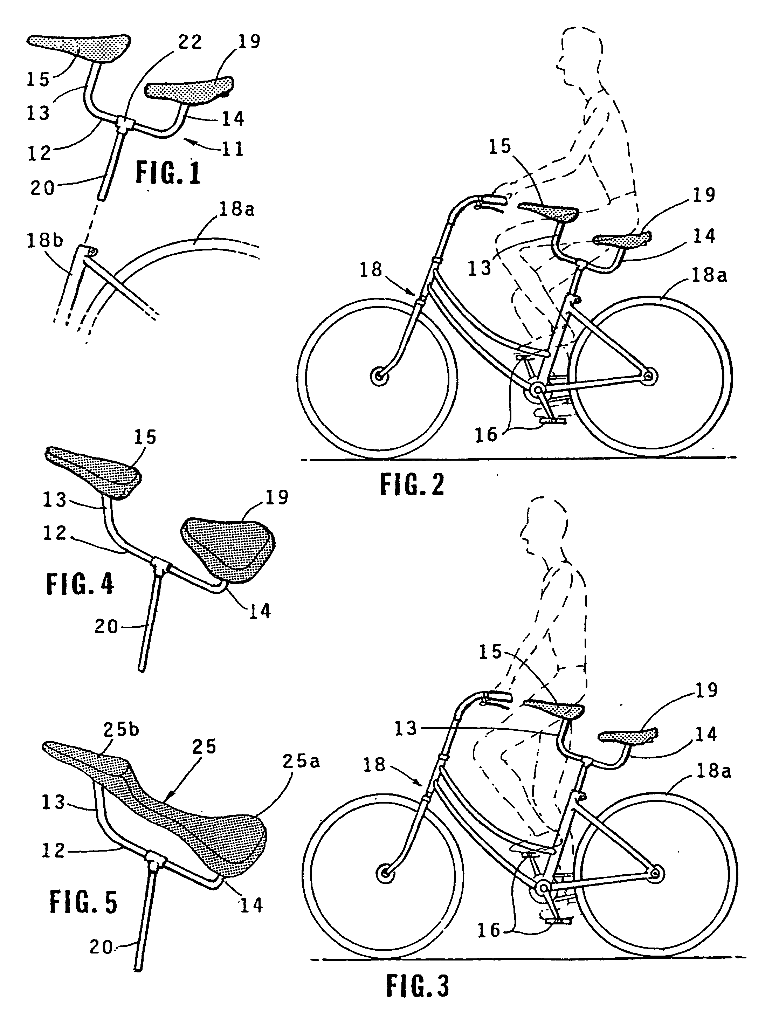

Referring to FIGS 1-4, a first bicycle adjustable in accordance with the invention is illustrated. Seat assembly 11 has a central horizontal bar portion 12 and two vertically extending bar portions 13 and 14 which extend substantially normally from the central bar portion. Central bar portion 12 runs through sleeve 22 to which it is clamped. Bar portion 13 extends in an upward direction a distance great enough to support seat 15 at a distance from the pedals 16 of the bicycle 18 to permit full extension of the legs when pedaling, as shown in FIG 3.

Bar portion 14 is positioned above the forward portion of bicycle rear wheel 18a and extends a distance such as to support second seat 19 to allow at least one of the rider's feet to reach the ground, when the bicycle is stopped and the rider is in an at rest position.

Vertical support bar 20 is attached to sleeve 22 and extends in a direction opposite to that of the bar portions 13 and 14. Bar 20 is adjustably attached to bicycle seat support 18b wherein it can be adjusted in height to bring the seats to the proper position for the rider.

Referring now to FIG 5, a second bicycle adjustable in accordance with the invention is illustrated. In this second bicycle rather than there being two separate seats, a single seat 25 having a lower seat member 25a and a higher seat member 25b corresponding to seats 19 and 15 is employed. Otherwise this second embodiment is the same as the first.

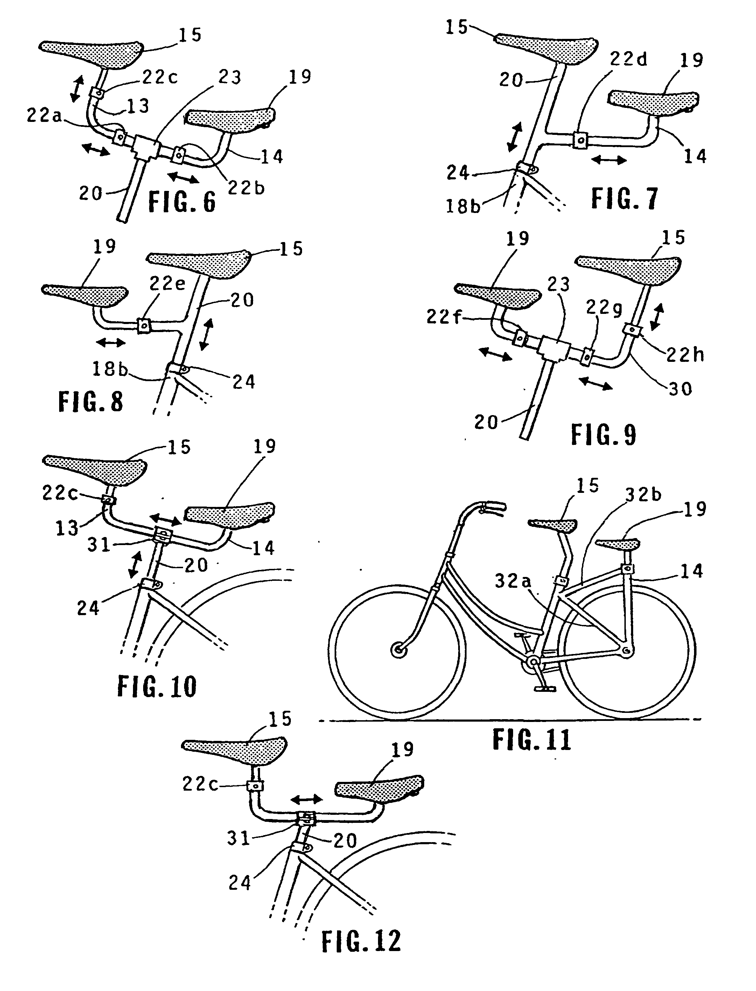

Referring now to FIG 6, a third bicycle adjustable in accordance with the invention is illustrated. This bicycle differs from the previous two in that adjuster sleeves 22a-22c are provided to enable adjustment of the positioning of the seats as indicated by the dual arrows in the drawing.

Referring now to FIG 7, a fourth bicycle adjustable in accordance with the invention is illustrated. In this bicycle, the first seat 15 used for pedaling is supported directly on the bicycle seat support 18b through adjuster sleeve 24 which enables the adjustment of the height of the seat, as indicated by the dual arrows. Further, the second seat 19 is connected to bar 20 through adjuster sleeve 22d which enables adjustment of seat 19 in the directions indicated by the dual arrows.

Referring now to FIG 8, a fifth bicycle adjustable in accordance with the invention is illustrated. In this bicycle, the second seat 19 is forward of the first seat 15 which is used for pedaling and to the rear of the rearward portion of the front wheel of the bicycle. This enables reaching an at rest position by moving forwardly rather than rearwardly which for some persons is easier to handle. As for the previous bicycle the positioning of the seats can be varied by adjusting sleeve adjusters 24 and 22e as indicated by the double arrows in the drawing.

Referring now to FIG 9, a sixth bicycle adjustable in accordance with the invention is illustrated. This bicycle is similar to the previous bicycle in that the first seat 15 is the higher riding seat. In this bicycle, however,seat 15 is to the rear of the support bar 20 and the seat support 18b. The seat is connected to angled bar 30 through sleeve adjuster 22h, the angled bar being connected through coupler 23 to the support bar 20. Seat 19 is connected to coupler 23 through sleeve adjuster 22f. The sleeve adjusters 22f,22g, and 22h enable adjustment of the seats as indicated by the bidirectional arrows.

Referring now to FIG 10, a seventh bicycle adjustable in accordance with the invention is illustrated. In this bicycle, the position of the seats 15 and 19 can be adjusted left and right on coupler 31 as indicated by the double arrows. The height of the seats is adjustable by moving support bar 20 up or down as may be required and then tightening coupler 24 to retain the bar in the desired position.

Referring now to FIG 11, an eighth bicycle adjustable in accordance with the invention is illustrated. In this bicycle, seat 15 is mounted in its normal position on the bicycle support bar 20. Seat 19 is mounted on support bar 14 attached to the axle of the rear wheel with support bars 32a and 32b providing additional support for the seat.

Referring now to FIG 12 a ninth bicycle adjustable in accordance with the invention is illustrated. In this bicycle, adjuster sleeve 31 is mounted on the support bar at an angle such that the angle between the support bar for seat 19 and vertical support bar 20 is greater than 90 degrees, this to avoid contact between seat 19 and the rear wheel.

While the invention has been described and illustrated in detail, this is intended by way of illustration and example only, the scope of the invention being limited by the terms of the following claims.

## Claims

1. A method of adjusting a bicycle (18) having two seats (15,19) to provide a riding position and a stopping position for a rider, comprising:
positioning a first seat (15) in a riding position wherein the rider's legs are fully extended when the rider is seated on the first seat and is pedalling; and
positioning a second seat (19) in a stopping position wherein at least one of the rider's feet may be placed on the ground when the rider is seated on the second seat.

2. A method according to claim 1 positioning the first seat (15) in front of the second seat (19).

3. A method according to claim 1 positioning the second seat (19) in front of the first seat (15).

4. A method according to any of claims 1 to 3 providing the first and second seats (15,19) as being separate, seats.

5. A method according to any of claims 1 to 3 providing the first and second seats (15, 19) as being a single elongate seat (25) having forward (25b) and rear (25a) seat portions.

6. A method of riding a bicycle (18) adjusted in accordance with any of claims 1 to 5, wherein the rider occupies the second lower seat (19) and places at least one foot on the ground when the bicycle is at rest, and wherein when the bicycle is in motion the rider occupies the first higher seat (15) and turns the pedals (16) with his or her feet.

## Patentansprüche

1. Verfahren zum Anpassen eines Fahrrads (18) mit zwei Sitzen (15, 19) so, daß ein Fahrposition und eine Halteposition für den Fahrer entstehen, wobei
ein erster Sitz (15) in einer Fahrposition positioniert wird, in der die Beine des Fahrers, wenn er auf dem ersten Sitz sitzt und fährt, völlig ausgestreckt sind, und
ein zweiter Sitz (19) in einer Halteposition positioniert wird, in der der Fahrer dann, wenn er auf dem zweiten Sitz sitzt, mindestens einen Fuß auf den Boden setzen kann.

2. Verfahren nach Anspruch 1, wobei der erste Sitz (15) vor dem zweiten Sitz (19) positioniert wird.

3. Verfahren nach Anspruch 1, wobei der zweite Sitz (19) vor dem ersten Sitz (15) positioniert wird.

4. Verfahren nach einem der Ansprüche 1 bis 3, wobei der erste und der zweite Sitz (15, 19) als getrennte Sitze vorgesehen werden.

5. Verfahren nach einem der Ansprüche 1 bis 3, wobei der erste und der zweite Sitz (15, 19) als einzelner länglicher Sitz (25) mit einer vorderen (15b) und einer hinteren (25a) Sitzposition vorgesehen werden.

6. Verfahren zum Fahren eines gemäß einem der Ansprüche 1 bis 5 angepaßten Fahrrads (18), wobei der Fahrer dann, wenn das Fahrrad steht, auf dem zweiten niedrigeren Sitz (19) sitzt und mindestens einen Fuß auf den Boden setzt, während er dann, wenn sich das Fahrrad bewegt, auf dem ersten höheren Sitz (15) sitzt und die Pedale mit den Füßen dreht.

## Revendications

1. Procédé de réglage d'une bicyclette (18) comportant deux selles (15, 19) pour obtenir une position de roulage et une position d'arrêt pour un cycliste, comprenant :
le positionnement d'une première selle (15) dans une position de roulage dans laquelle les jambes du cycliste sont complètement étendues lorsque le cycliste est assis sur la première selle et est en train de pédaler; et
le positionnement d'une deuxième selle (19) dans une position d'arrêt dans laquelle au moins l'un des pieds du cycliste peut être mis à terre lorsque le cycliste est assis sur la deuxième selle.

2. Procédé selon la revendication 1, positionnant la première selle (15) devant la deuxième selle (19).

3. Procédé selon la revendication 1, positionnant la deuxième selle (19) devant la première selle (15).

4. Procédé selon l'une quelconque des revendications 1 à 3, fournissant les première et deuxième selles (15, 19) sous la forme de selles distinctes.

5. Procédé selon l'une quelconque des revendications 1 à 3, fournissant les première et deuxième selles (15, 19) sous la forme d'une selle unique (25), allongée, comportant une partie de siège avant (25b) et une partie de siège arrière (25a).

6. Procédé pour rouler à bicyclette (18) réglée selon l'une quelconque des revendications 1 à 5, dans lequel le cycliste occupe la deuxième selle (19), plus basse, et met au moins un pied à terre lorsque la bicyclette est immobile, et dans lequel lorsque la bicyclette est en mouvement le cycliste occupe la première selle (15), plus haute, et fait tourner les pédales (16) avec ses pieds.
